# EUROPEAN PATENT SPECIFICATION

(11) **EP 2 028 065 B1**
(45) Date of publication and mention of the grant of the patent: **26.10.2011**
(21) Application number: 08275036.5
(22) Date of filing: 22.07.2008
(51) Int. Cl.: B60R 21/231, B60R 21/233

(54) **Inflatable curtain airbags**
Aufblasbare Vorhang-Airbags
Airbags rideau gonflables

(30) Priority: 24.08.2007 GB 0716506
(43) Date of publication of application: 25.02.2009
(73) Proprietor: JAGUAR CARS LIMITED, Whitley Coventry Warwickshire CV3 4LF (GB)
(72) Inventor: Hill, Christopher, Southam, Northamptonshire CV47 8FB (GB); Lockwood, Andrew, Daventry, Northamptonshire NN11 0SB (GB)
(74) Representative: Holmes, Matthew William

(56) References cited:
- JP-A- 9 118 187
- JP-A- 10 315 889
- US-A1- 2003 189 328
- US-A1- 2003 205 889
- US-A1- 2003 230 878
- US-A1- 2006 192 368
- US-A1- 2007 007 757

## Description

This invention relates to inflatable airbags and particularly to airbags which may be installed on an upper part of a vehicle's "B" pillar and side roof rail.

A typical known curtain airbag comprises a central inflatable portion, which includes an inflator for providing the necessary gas supply, and which is located in the region of the vehicle's "B" pillar, and two elongate inflatable portions extending either side of the central portion. The elongate portions are trained along the side roof rail of the vehicle. The airbag is packed into a frangible cover and located behind a headliner or trim panel. The purpose of these side curtain airbags is to prevent an occupant's head from coming into contact with the vehicle's window glass or any intruding object. On deployment of such an airbag, initially, the central portion tends to the "balloon out" and then subsequently, the elongate portions commence to inflate as the gas moves outwards from the central portion.

It has been found that if an occupant's head is close to or resting against the side window or side trim of the vehicle when the airbag deploys, then as it commences to inflate, there is a tendency for the airbag to wrap a part of itself around the inboard side of the head and to push it further against the window glass. Clearly, this is undesirable.

The present invention seeks to mitigate this problem.

US 2003/205889 A discloses a curtain airbag having the features of the precharacterizing portion of claim 1 appended hereto.

US 2003/189328 A discloses a cushion airbag having a tether around the mid portion to delay inflation thereof. The letter consists of concertina folded strips of material.

US 2007/007757 A discloses a cushion airbag having a central tether to delay inflation of the mid portion. The tether consists of strap portions mutually engaged by a frictional force.

According to the present invention there is provided a curtain airbag according to claim 1.

The frangible restraining strap may be provided with perforations to permit rupture under gas pressure.

Additionally, the frangible restraining strap may have a plurality of rows of perforations with the number of perforations from one row to the next increasing in number to allow greater amounts of expansion in one preferred direction.

Alternatively, the frangible restraining strap may include two folds therein, one side of a first fold being attached to an adjacent side of a second fold by way of a seam, the first fold incorporating a series of perforations. This embodiment deploys in a two-stage process whereby the seam ruptures before the series of perforations.

The frangible restraining strap may be composed of a strip of fabric or plastic tape.

Optionally, additional frangible restraining straps may be arranged around the central inflatable portion adjacent to one another.

In a preferred embodiment, the inflatable central and elongate portions are enclosed in a frangible cover and the frangible restraining strap is secured external to the cover.

Some embodiments of the invention will now be described, by way of example only, with reference to the drawings of which:
Figure 1 is a schematic diagram of a curtain airbag in accordance with an embodiment of the invention, and
Figures 2, 3 and 4 are perspective views of three different types of frangible restraining straps comprising a part of the airbag of Figure 1.

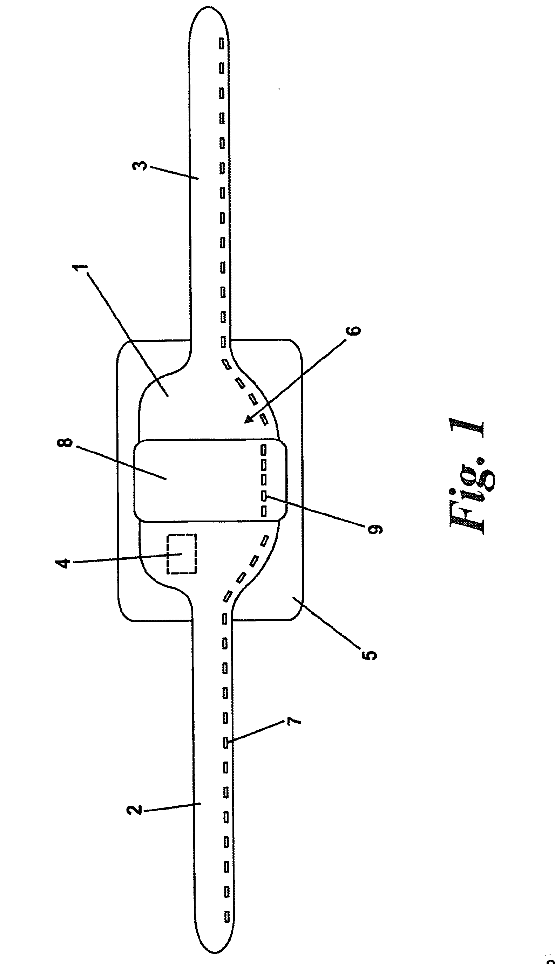

In Figure 1, a curtain airbag suitable for use in a motor vehicle comprises a central inflatable portion 1 and two inflatable elongate portions 2, 3 extending either side from the central portion 1. An inflator, (shown ghosted) for providing inflating gas, is included within the central portion 1.

The central portion 1 is secured to a mounting bracket 5 which, in turn, can be fixed to a motor vehicle in the upper region of the "B" pillar. When the airbag is fitted to a vehicle, the elongate portions 2, 3 are trained along the roof rail of the vehicle above the front and rear side windows and the airbag and bracket assembly are hidden behind the vehicle's headliner and "B" pillar trim.

A frangible fabric cover 6 encases the central and elongate portions 1, 2, 3. Perforations 7 running the length of the cover 6 permit the cover to rupture during deployment of the airbag.

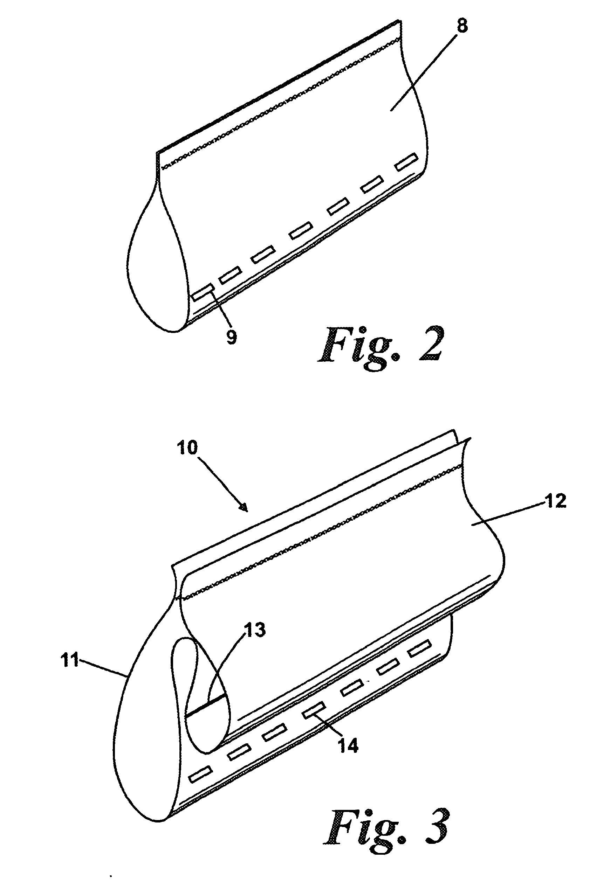

With reference to Figures 1 and 2, a frangible restraining strap 8 is provided. The strap 8 comprises a strip of plastics tape whose ends are joined together to form a loop which is fitted snugly around the cover 6 in the region of the central portion 1. The strap 8 incorporates perforations 9 to enable it to rupture under inflating gas pressure.

Operation of the embodiment of Figures 1 and 2 will now be described. In this specific example, the airbag of Figure 1 is installed in a vehicle and the front seat passenger had his head resting against a side window with the back of his head close to the "B" pillar.

The airbag inflator 4 is then fired (by conventional means). A conventional curtain airbag without the restraining strap 8 would behave as follows. The cover 6 would rupture in the region of the central portion, thus allowing the central portion 1 to "balloon out". Subsequently the cover would rupture along the elongate portions allowing these to inflate.

As mentioned earlier, this preferential early inflation of the central potion tends to push the occupant's head in an outboard direction.

By virtue of the restraining strap 8 in accordance with this embodiment, the central portion 1 is prevented from ballooning out in the initial deployment phase. Since the gas flow is inhibited in the region of the central portion 1 up until the point at which the restraining strap 8 ruptures, the gas flow is deflected through the elongate portions 2, 3. This creates a "leap frog" effect past the occupant's head, with a significant quantity of gas flowing into a region of the elongate portion 2 which is in front of his head. Consequently, forces are applied to the back and front of the occupant's head, tending to push it away from the window rather than towards it.

In the later stages of deployment, the perforations 9 of the restraining strap 8 fail, allowing the central portion1 to continue expanding.

In Figure 3, an alternative form of a restraining strap 10 comprises a loop of material having two folds 11, 12. One side of the first fold 11 is attached to an adjacent side of a second fold 12 by way of a seam 13. The first fold 11 incorporates a series of perforations 14 across its width. This set of perforations 14 is configured to have a greater strength than the seam 13 (typically twice as great). This forum of a restraining strap 10 permits a two-stage mode of deployment.

On initial deployment of the gas inflator, the strap 10 restricts inflation of the central portion 1 up to the point at which the seam 13 fails and the strap 10 opens out into an enlarged diameter Loop. During this initial phase, gas flows past the occupant's head through the elongate portion 2 towards the front of the vehicle. Once the seam 13 fails, the enlarge loop forms a chute over the occupant's head. With this comparatively large amount of fabric containing gas at relatively low pressure, the cute had less of a tendency to grip the head than does the conventional airbag material. Hence there is less of a tendency for the head to be pushed outboard. As the gas pressure continues to build up, the perforations 14 fail and the strap no longer restricts the central portion's inflation.

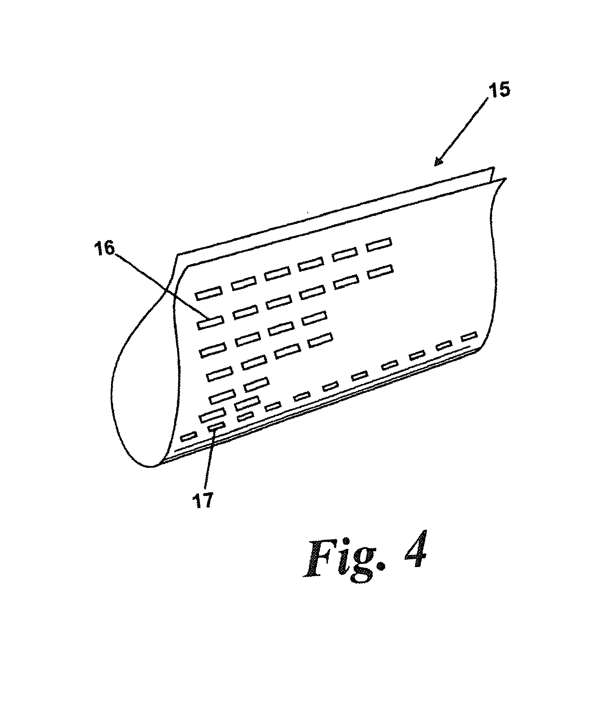

In Figure 4, a further alternative form of restraining strap 15 comprises a loop of material provided with a plurality of rows of perforations which form a lattice-work 16. In this example, the number of perforations increases along the width of the strap 15 in one preferred direction. This permits different amounts of expansion across the width of the strap 15 as the inflating gas moves from the central portion 1 into one of the elongate portions 2, 3. For example, the perforations can be made increasingly more numerous in the direction of gas flow. This creates a path of least resistance during the initial phase of airbag deployment in order to bias the gas flow towards the front of the head of a front seat occupant i.e. the strap 15 stretches more at its end which is most distant from the source of gas flow, thereby allowing more gas to get in front of the occupant's head. An additional series of perforations 17 across the width of the strap 15 is also provided in order to permit the strap to eventually rupture, thus allowing full expansion of the central portion.

## Claims

1. A curtain airbag comprising a central inflatable portion (1) including an inflator for producing inflating gas on deployment of the airbag, two inflatable elongate portions (2, 3) extending either side of said central inflatable portion (1), and a frangible restraining strap (8; 10; 15) secured around the central inflatable portion (1), **characterized in that** on deployment of the airbag, the frangible restraining strap (8) delays inflation of the central portion (1) by deflecting the inflating gas into the elongate portions (2, 3), and subsequently ruptures to allow said central inflatable portion to inflate.

2. A curtain airbag as claimed in claim 1 in which the frangible restraining strap (8; 10; 15) is provided with perforations (9; 14; 16).

3. A curtain airbag as claimed in either preceding claim in which the frangible restraining strap (15) is provided with a plurality of rows of perforations with the number of perforations from one row to the next increasing in number to allow greater amounts of expansion in one preferred direction.

4. A curtain airbag as claimed in claim 1 or claim 2 in which the frangible restraining strap (10) includes two folds (11, 12) therein, one side of a first fold (11) being attached to an adjacent side of a second fold (12), the first fold (11) incorporating a series of perforations (14).

5. A curtain airbag as claimed in any preceding claim in which the frangible restraining strap (8) is composed of a strip of plastics tape.

6. A curtain airbag as claimed in any preceding claim and including additional frangible restraining straps arranged around the central inflatable portion (1) adjacent to one another.

7. A curtain airbag as claimed in any preceding claim in which the inflatable central (1) and elongate portions (2, 3) are enclosed in a frangible cover (6) and the frangible restraining strap is secured external to the cover (6).

## Patentansprüche

1. Vorhang-Airbag, der einen zentralen aufblasbaren Abschnitt (1), der eine Aufblasvorrichtung zum Erzeugen von Aufblasgas beim Entfalten des Airbags, zwei aufblasbare längliche Abschnitte (2, 3), die sich auf den beiden Seiten des zentralen aufblasbaren Abschnitts (1) erstrecken, und ein zerreißbares Rückhalteband (8; 10; 15), das um den zentralen aufblasbaren Abschnitt (1) befestigt ist, umfasst, **dadurch gekennzeichnet, dass** beim Entfalten des Airbags das zerreißbare Rückhalteband (8), durch das Ablenken des Aufblasgases in die länglichen Abschnitte (2, 3), das Aufblasen des zentralen Abschnitts (1) verzögert und anschließend zerreißt, um zu ermöglichen, dass sich der zentrale aufblasbare Abschnitt aufbläst.

2. Vorhang-Airbag nach Anspruch 1, wobei das zerreißbare Rückhalteband (8; 10; 15) mit Perforationen (9; 14; 16) versehen ist.

3. Vorhang-Airbag nach einem der vorhergehenden Ansprüche, wobei das zerreißbare Rückhalteband (15) mit mehreren Reihen von Perforationen versehen ist, wobei die Anzahl der Perforationen von einer Reihe zu der nächsten in der Anzahl zunimmt, um größere Ausmaße an Ausdehnung in einer bevorzugten Richtung zu ermöglichen.

4. Vorhang-Airbag nach Anspruch 1 oder Anspruch 2, wobei das zerreißbare Rückhalteband (10) zwei Falten (11, 12) in demselben einschließt, wobei die eine Seite einer ersten Falte (11) an einer benachbarten Seite einer zweiten Falte (12) befestigt ist, wobei die erste Falte (11) eine Folge von Perforationen (14) einschließt.

5. Vorhang-Airbag nach einem der vorhergehenden Ansprüche, wobei das zerreißbare Rückhalteband (8) aus einem Streifen eines Kunststoff-Bandes besteht.

6. Vorhang-Airbag nach einem der vorhergehenden Ansprüche, das zusätzliche zerreißbare Rückhaltebänder einschließt, die benachbart zueinander um den zentralen aufblasbaren Abschnitt (1) angeordnet sind.

7. Vorhang-Airbag nach einem der vorhergehenden Ansprüche, wobei die aufblasbare zentralen (1) und länglichen Abschnitte (2, 3) in einer zerreißbaren Abdeckung (6) eingeschlossen sind und das zerreißbare Rückhalteband außen an der Abdeckung (6) befestigt ist.

## Revendications

1. Coussin gonflable de type rideau comprenant une partie centrale gonflable (1) comportant un gonfleur pour produire un gaz de gonflage au déploiement du coussin gonflable, deux parties allongées gonflables (2, 3) s'étendant de chaque côté de ladite partie centrale gonflable (1), et une sangle de retenue frangible (8 ; 10 ; 15) fixée autour de la partie centrale gonflable (1), **caractérisé en ce qu'**au déploiement du coussin gonflable la sangle de retenue frangible (8) retarde le gonflage de la partie centrale (1) en déviant le gaz de gonflage dans les parties allongées (2, 3), et se rompt subséquemment pour permettre à ladite partie centrale gonflable de se gonfler.

2. Coussin gonflable selon la revendication 1, dans lequel la sangle de retenue frangible (8 ; 10 ; 15) est dotée de perforations (9 ; 14 ; 16).

3. Coussin gonflable selon l'une quelconque des revendications précédentes, dans lequel la sangle de retenue frangible (15) est dotée d'une pluralité de rangées de perforations, le nombre de perforations augmentant en nombre d'une rangée à la suivante pour permettre de plus grandes quantités d'expansion dans un sens préféré.

4. Coussin gonflable selon la revendication 1 ou la revendication 2, dans lequel la sangle de retenue frangible (10) comporte deux plis (11, 12), un côté d'un premier pli (11) étant fixé à un côté adjacent d'un second pli (12), le premier pli (11) incorporant une série de perforations (14).

5. Coussin gonflable selon l'une quelconque des revendications précédentes, dans lequel la sangle de retenue frangible (15) est composée d'une bande de ruban adhésif plastique.

6. Coussin gonflable selon l'une quelconque des revendications précédentes et comportant des sangles de retenue frangibles supplémentaires agencées autour de la partie centrale gonflable (1) les unes adjacentes aux autres.

7. Coussin gonflable selon l'une quelconque des revendications précédentes, dans lequel la partie centrale gonflable (1) et les parties allongées gonflables (2, 3) sont enfermées dans un couvercle frangible (6) et la sangle de retenue frangible est fixée extérieurement au couvercle (6).
